Europäisches Patentamt

European Patent Office

Office européen des brevets

(19)

(11) **EP 1 197 738 A1**

(12) **EUROPÄISCHE PATENTANMELDUNG**

(43) Veröffentlichungstag:
   **17.04.2002 Patentblatt 2002/16**

(51) Int Cl.⁷: **G01L 11/02**

(21) Anmeldenummer: **00810965.4**

(22) Anmeldetag: **18.10.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(71) Anmelder: **ABB RESEARCH LTD.**
   **8050 Zürich (CH)**

(72) Erfinder: **Bohnert, Klaus**
   **5452 Oberrohrdorf (CH)**

(74) Vertreter: **ABB Patent Attorneys**
   **c/o ABB Schweiz AG**
   **Brown Boveri Strasse 6**
   **5400 Baden (CH)**

(54) **Anisotroper Faserlaser-Sensor mit verteilter Rückkopplung**

(57) Die Erfindung betrifft einen DFB Faserlaser-Sensor (1). Durch eine Messgrösse kann eine lineare Doppelbrechung zwischen Modenpaaren der laserverstärkenden Faser (2) induziert und eine zugehörige Schwebungsfrequenz ($\Delta\nu_1$, $\Delta\nu_2$, $\Delta\nu_3$) gemessen werden. Erfindungsgemäss weist die laserverstärkende Faser (2) eine nicht rotationssymmetrische Struktur auf, so dass isotrope Drücke p, akustische Wellen oder radial an die laserverstärkende Faser (2) anlagerbare chemische Substanzen detektierbar sind. In einem zweiten Aspekt der Erfindung sind ein Emissionswellenlängenbereich und Parameter (a, b, $\Delta N$) der laserverstärkenden Faser (2) sowie eine Gitterperiode $\Lambda$ des Faser-Bragg-Gitter Resonators (3) so aufeinander abgestimmt, dass mindestens zwei unterschiedliche Raummoden ($LP_{01}$, $LP_{11}^{gerade}$, $LP_{11}^{ungerade}$, $LP_{21}^{gerade}$) ausbreitungsfähig sind und Schwebungsfrequenzen ($\Delta\nu_1$, $\Delta\nu_2$, $\Delta\nu_3$) zwischen ihnen zugeordneten, oszillationsfähigen longitudinalen Lasermoden messbar sind. Ausführungsbeispiele betreffen: rotationsasymmetrische Fasertypen, eine Wahl spezieller Raummoden ($LP_{11}^{ungerade}$, $LP_{21}^{gerade}$) und/oder mehrfacher Faser-Bragg-Gitter (3) zur Verringerung der Schwebungsfrequenzen ($\Delta\nu_1$, $\Delta\nu_2$, $\Delta\nu_3$) unter 100 GHz; und Elimination von Temperatureinflüssen z. B. durch Detektion einer Mehrzahl von Schwebungsfrequenzen ($\Delta\nu_a$, $\Delta\nu_b$, $\Delta\nu_c$, $\Delta\nu_d$) zwischen unterschiedlichen Paaren von Raummoden ($LP_{01}$, $LP_{11}^{gerade}$, $LP_{11}^{ungerade}$, $LP_{21}^{gerade}$) und/oder Polarisationsmoden (X, Y).

FIG. 1a

EP 1 197 738 A1

**2a**          **2b**

**2**

b

a          **FIG. 1b**

**8**

$LP_{01,x}$

$LP_{11,x}^{gerade}$

**8**

## FIG. 1c

$\lambda$

$\lambda_{LP01}$          $\lambda_{LP11}^{gerade}$

## FIG. 1d

**Beschreibung**

**TECHNISCHES GEBIET**

Die vorliegende Erfindung bezieht sich auf das Gebiet der faseroptischen Messtechnik. Sie geht aus von einem Faserlaser-Sensor nach dem Oberbegriff der unabhängigen Ansprüche.

**STAND DER TECHNIK**

Bei der Erdölförderung müssen Bohrlöcher hinsichtlich Druck und Temperatur überwacht werden. Im Bohrloch können die Flüssigkeitsdrücke bis zu ca. 100 MPa (1000 bar) und die Temperaturen bis zu über 200 °C betragen. Zur Druckmessung bis ca. 170 °C werden häufig elektrische Sensoren, wie z. B. Piezowiderstände, piezoelektrische Elemente, kapazitive Sonden oder Kristallresonatoren, oder optische Drucksensoren, wie z. B. Fabry-Perot Resonatoren oder elastooptische Sensoren, verwendet.

In dem U. S. Pat. No. 5,844,927 wird ein DFB Faserlaser-Sensor gemäss Oberbegriff der unabhängigen Ansprüche offenbart. Es wird eine laserverstärkende Faser mit einem verteilten Faser-Bragg-Gitter Resonator offenbart, in dem zwei orthogonal polarisierte Moden mit geringfügig unterschiedlichen Wellenlängen oszillieren können. Bei einer Verwendung der laserverstärkenden Faser als Sensorfaser wird durch eine transversale Kraft eine Doppelbrechung zwischen den Polarisationsmoden induziert und als kraftproportionale Schwebungsfrequenz gemessen. Es werden auch spektral separierte serielle und parallele Multiplexanordnungen mehrerer Faserlaser-Sensoren angegeben. Nachteilig ist, dass ausschliesslich zwei Polarisationsmoden, nämlich der räumliche Grundmodus der Faser mit seinen beiden orthogonalen linearen Polarisationszuständen, verwendet wird und ein isotroper Druck nicht messbar ist.

In der WO 99/44023 wird ein Faserlaser-Drucksensor offenbart, bei dem eine laserverstärkende Faser und eine Sensorfaser zwischen zwei Faser-Bragg-Gitter Endreflektoren angeordnet sind. Die Sensorfaser besitzt eine Asymmetrie derart, dass durch isotropen Druck eine Doppelbrechung zwischen zwei linearen Polarisationsmoden oder zwischen dem $LP_{01}$- und $LP_{11}^{gerade}$-Raummode induzierbar und als druckproportionale Schwebungsfrequenz messbar ist. Gemäss der WO 00/39552 können in einer solchen Anordnung auch Differenzdrücke mit zwei zueinander um 90° verdrehten Sensorfasersegmenten gemessen werden. Nachteilig an diesen Sensoren sind der beschränkte Dynamikbereich, da induzierte optische Phasenverschiebungen nur bis zu einem Maximalwert von 90° eindeutig detektierbar sind, und die geringe Stabilität der Laseremission. Ausserdem ist die Fabrikation aufwendig, weil die Fasersegmente aufeinander abgestimmt und in separaten Druckkammern angeordnet werden müssen.

**DARSTELLUNG DER ERFINDUNG**

Aufgabe der vorliegenden Erfindung ist es, einen DFB Faserlaser-Sensor anzugeben, der zur frequenzkodierten Messung isotroper Drücke, akustischer Wellen oder chemischer Substanzen geeignet ist. Diese Aufgabe wird erfindungsgemäss durch die Merkmale der unabhängigen Ansprüche gelöst.

In einem ersten Aspekt besteht die Erfindung in einem Faserlaser-Sensor, der einen DFB-Faserlaser mit einer laserverstärkenden Faser und einem darin verteilt eingeschriebenen Faser-Bragg-Gitter aufweist, wobei durch eine Messgrösse eine Doppelbrechung und Schwebungsfrequenz zwischen Moden der laserverstärkenden Faser induzierbar sind und Messmittel zur Bestimmung der Schwebungsfrequenz vorhanden sind, wobei ferner die Messgrösse ein radial auf die laserverstärkende Faser einwirkender isotroper Druck oder eine radial an die laserverstärkende Faser anlagerbare chemische Substanz ist und die laserverstärkende Faser eine nicht rotationssymmetrische Struktur aufweist derart, dass durch den isotropen Druck oder die chemische Substanz die Doppelbrechung und Schwebungsfrequenz, insbesondere Änderungen der Doppelbrechung und Schwebungsfrequenz, zwischen einem oder mehreren Paaren von Moden der laserverstärkenden Faser induzierbar sind. Durch die nicht rotationssymmetrische Struktur wird erstmals ein DFB Faserlaser-Sensor mit radial anisotroper Druckempfindlichkeit oder radial anisotroper Anlagerungsempfindlichkeit geschaffen. Der Dynamikbereich ist gegenüber den Faserlaser-Drucksensoren mit separater Sensorfaser und diskreten Endreflektoren vergrössert. Da Laserfaser, Sensorfaser und Faser-Bragg-Gitter Resonator in einem Faserelement integriert sind, ist der Sensor sehr einfach herstellbar, extrem kompakt und einfach in einem Einkammer-Gehäuse verpackbar. Er ist besonders zur zuverlässigen Messung isotroper Flüssigkeitsdrücke in Erdölbohrlöchern bestens geeignet. Zur Messung chemischer Substanzen ist der Sensor bezüglich Art und Konzentration der Substanzen in einer Anlagerungsschicht eichbar.

Ein Ausführungsbeispiel betrifft Typen geeigneter laserverstärkende Fasern, nämlich solche mit einem elliptischen Kern, einer "bow-tie"-Struktur, einer "panda"-Struktur, einer "side-hole"-Struktur, einer "D-shape"-Struktur, einer elliptischen Faserhülle oder einer teilweise angeschliffenen Faserhülle. Die laserverstärkende Faser kann auch eine mikrostrukturierte Faser mit einer nicht rotationssymmetrischen Struktur sein.

Andere Ausführungsbeispiele betreffen die Art der Moden, die gleiche oder unterschiedliche transversale Raummoden mit zueinander orthogonaler linearer Polarisation, oder aber unterschiedliche transversale Raummoden mit gleicher linearer Polarisation sind. Insbesondere können für eine laserverstärkende Faser mit elliptischem Kern ein Emissionswellenlängenbereich und Parameter sowie eine Gitterperiode Λ des Faser-Bragg-Gitter Resonators so aufeinander abgestimmt sein, dass mindestens zwei, insbesondere genau zwei oder vier, unterschiedliche Raummoden im Emissionswellenlängenbereich bei Bragg-Wellenlängen des Faser-Bragg-Gitter Resonators ausbreitungsfähig sind. Dann sind mit den transversalen Raummoden assoziierte longitudinale Lasermoden in der laserverstärkenden Faser anregbar und schwingungsfähig. Bevorzugt sind Zusatzmittel vorhanden, die zur räumlich selektiven Auskopplung und Detektion mindestens eines Interferenzmusteranteils unterschiedlicher Raummoden mit einem nichtverschwindenden Kontrast im resultierenden Schwebungssignal ausgestaltet sind. Dann sind Schwebungen bzw. deren Frequenzen z. B. zwischen einem fundamentalen und einem ersten höheren geraden Raummode, zwischen einem ersten höheren ungeraden und einem zweiten höheren geraden Mode und/oder zwischen gleichen, insbesondere fundamentalen, Raummoden mit unterschiedlicher linearer Polarisation messbar. Im zweiten Fall sind die Parameter der laserverstärkenden Faser, insbesondere Längen der Kernellipsen-Hauptachsen und ein Kern-Mantel Brechungsindexunterschied, bevorzugt in einem Wertebereich gewählt, in dem die Schwebungsfrequenz kleiner als 100 GHz und vorzugsweise kleiner als 10 GHz ist und insbesondere in der Nähe eines Nulldurchgangs liegt. Durch Wahl einer relativ kleinen Schwebungsfrequenz können als Messmittel, insbesondere als Frequenzfilter und Frequenzzähler, Standardkomponenten eingesetzt werden.

In einem weiteren Ausführungsbeispiel sind zwei Faser-Bragg-Gitter Resonatoren übereinander, überlappend oder räumlich getrennt in die laserverstärkende Faser eingeschrieben und ist ein Verhältnis der Gitterperioden der Faser-Bragg-Gitter Resonatoren ungefähr gleich einem Verhältnis effektiver Brechungsindizes zweier unterschiedlicher Raummoden, vorzugsweise des fundamentalen und ersten höheren geraden Raummodes, oder zweier gleicher Raummoden mit orthonaler linearer Polarisation gewählt. Dadurch kann die Schwebungsfrequenz ohne Druck auf einen Wert von im wesentlichen Null vorgegeben werden.

Zusätzliche Ausführungsbeispiele betreffen Mittel zur Bestimmung einer Temperatur des Faserlaser-Sensors und zur Korrektur einer Temperaturabhängigkeit eines Signals und insbesondere Drucksignals des Faserlaser-Sensors. Zur Temperaturbestimmung können die Mittel z. B. ein Wellenlängenmultiplexer mit einem geeignet wellenlängenabhängigen Auskoppelverhältnis sein, mit dem eine Emissions- oder Laserwellenlänge, d. h. eine oszillationsfähige Bragg-Wellenlänge, des Faserlaser-Sensors messbar ist. Die Mittel können auch zur Messung mehrerer Schwebungsfrequenzen und zur separaten Bestimmung einer Druckänderung $\delta p$ und Temperaturänderung $\delta T$ mit Hilfe bekannter Temperatur- und Druckkoeffizienten der Schwebungsfrequenzen des Faserlaser-Sensors ausgestaltet sein. Zur inhärenten Temperaturkompensation können auch Bragg-Wellenlängen, die einem fundamentalen Raummode und einem ersten höheren geraden Raummode zugeordnet sind, durch eine Wahl der Parameter der laserverstärkenden Faser und der Gitterperiode Λ des Faser-Bragg-Gitter Resonators so vorgegeben sein, dass Gruppengeschwindigkeiten dieser Raummoden bei der jeweiligen Bragg-Wellenlänge gleich gross sind.

In einem wichtigen Ausführungsbeispiel ist die Messgrösse ein zeitlich variierender Druck p, insbesondere eine akustische Welle oder eine seismische Welle. Zur Verbesserung der akustischen Impedanzanpassung an ein schallübertragendes Medium kann die laserverstärkende Faser mit einer Beschichtung beispielsweise aus Polyurethan versehen sein.

In einem zweiten Aspekt besteht die Erfindung in einem Faserlaser-Sensor, der einen DFB-Faserlaser mit einer laserverstärkenden Faser und einem darin verteilt eingeschriebenen Faser-Bragg-Gitter Resonator umfasst, wobei durch eine Messgrösse eine Doppelbrechung und Schwebungsfrequenz zwischen Moden der laserverstärkenden Faser induzierbar sind und Messmittel zur Bestimmung der Schwebungsfrequenz vorhanden sind, wobei ferner die laserverstärkende Faser eine nicht rotationssymmetrische Struktur aufweist und ein Emissionswellenlängenbereich und Parameter der laserverstärkenden Faser derart gewählt sind, dass der Emissionswellenlängenbereich und ein Wellenlängenbereich, in dem mindestens zwei unterschiedliche Raummoden ausbreitungsfähig sind, in einem Spektralbereich überlappen und mindestens eine Gitterperiode des Faser-Bragg-Gitter Resonators derart gewählt ist, dass den unterschiedlichen Raummoden zugeordnete Bragg-Wellenlängen in dem Spektralbereich liegen. Es sollen also mindestens zwei der unterschiedlichen Raummoden in dem Spektralbereich jeweils mindestens eine Bragg-Wellenlänge aufweisen, auf welcher ein dem Raummode zugeordneter longitudinaler Lasermode oszillationsfähig ist.

Weitere Ausführungen, Vorteile und Anwendungen der Erfindung ergeben sich aus abhängigen Ansprüchen sowie aus der nun folgenden Beschreibung und den Figuren.

## KURZE BESCHREIBUNG DER ZEICHNUNG

Es zeigen für einen erfindungsgemässen DFB Faserlaser-Sensor:

Fig. 1a-1d     eine zweimodige laserverstärkende Faser mit elliptischem Kern in Seitenansicht und im Querschnitt, Raummoden-Intensitätsverteilungen und zugehöriges Laser-Modenspektrum;

Fig. 2             Beispiele für nicht rotationssymmetrische Fasern;

Fig. 3-5           Beispiele für effektive Brechungsunterschiede und Schwebungsfrequenzen von Raummoden und Polarisationsmoden in elliptischen Kernfasern;

Fig. 6a, 6b        für eine Faser gemäss Fig. 1a-1b Raummoden- und Polarisationsmoden - Intensitätsverteilungen und zugehöriges Laser-Modenspektrum;

Fig. 7             ein Gehäuse für einen DFB Faserlaser-Drucksensor;

Fig. 8             eine schematische Darstellung des gesamten Faserlaser-Sensors; und

Fig. 9             eine serielle Multiplexanordnung in Reflexion mit mehreren Faserlaser-Sensoren mit unterschiedlichen Laserwellenlängen.

In den Figuren sind gleiche Teile mit gleichen Bezugszeichen versehen.

## WEGE ZUR AUSFÜHRUNG DER ERFINDUNG

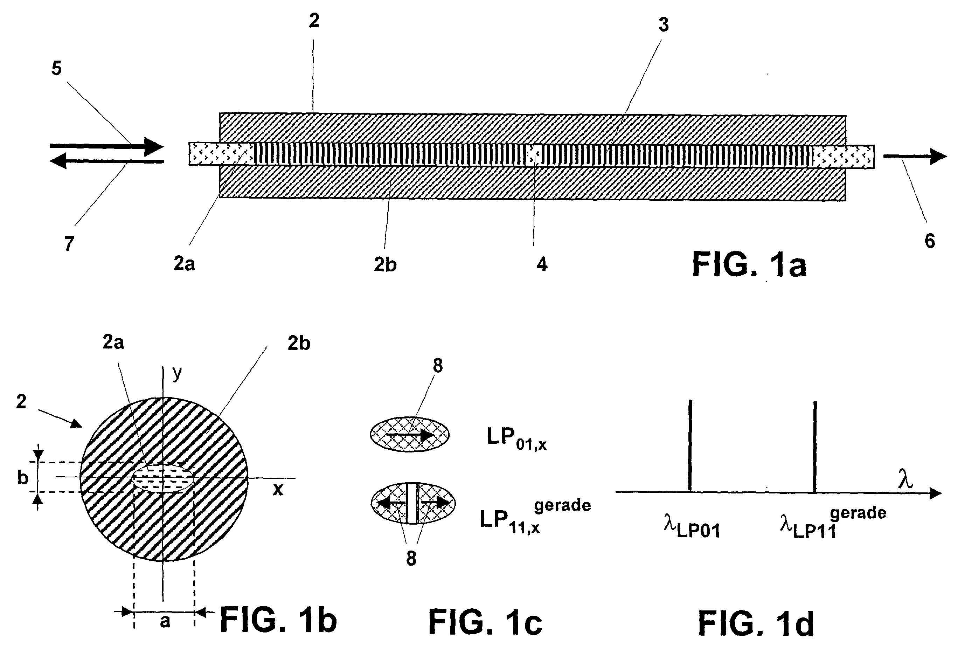

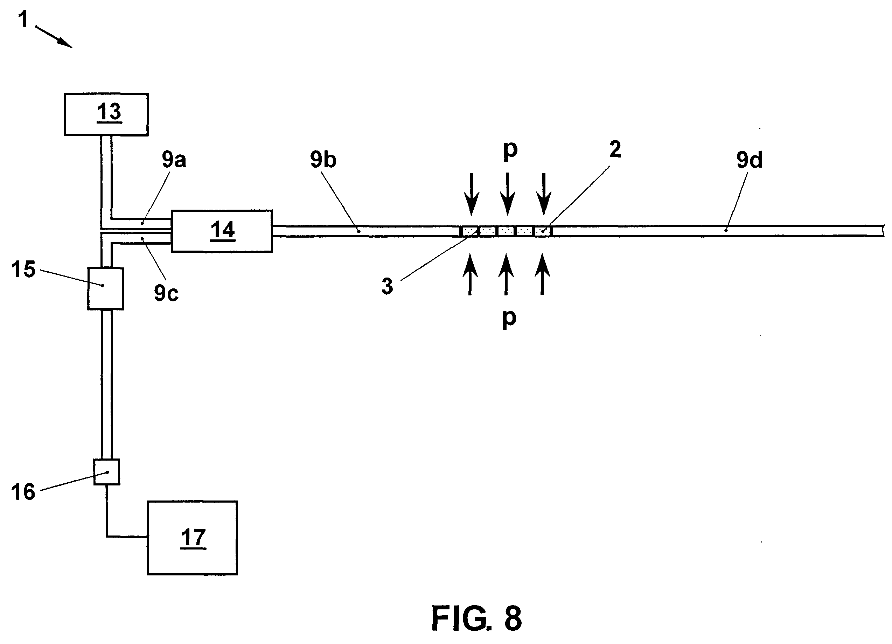

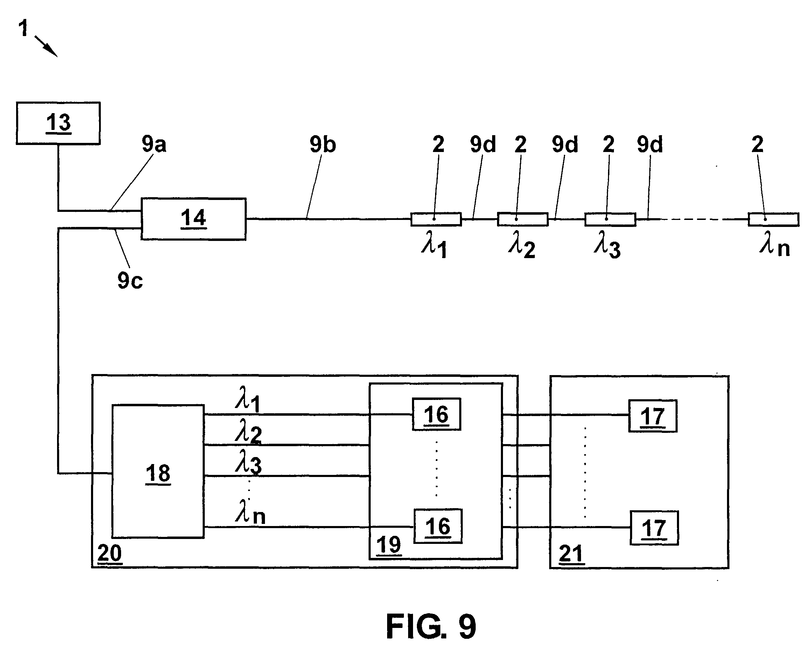

Fig. 1a und 1b zeigen schematisch den Sensorteil eines erfindungsgemässen DFB Faserlaser-Sensors 1. Der Laser 1 umfasst eine laserverstärkende Faser 2 beispielsweise mit einem elliptischen Kern 2a und einer runden Faserhülle ("cladding") 2b. Durch die lange Hauptachse a und die kurze Hauptache b des Kerns 2a sind lineare Polarisationsachsen x, y vorgegeben. Der Kern 2a ist mit seltenen Erdionen dotiert. Die Ionenart richtet sich nach dem gewünschten Emissionswellenlängenbereich des Lasers 2. Vorzugsweise werden mit Erbium/Ytterbium oder Erbium dotierte laserverstärkende Fasern 2 verwendet, deren Emission im Bereich zwischen etwa 1520 nm und 1560 nm liegt. Statt mit Erbium kann die Faser auch mit anderen seltenen Erdionen dotiert sein, z. B. Praseodymium (Emission um 1300 nm), Neodymium (Emission um 1060 nm) oder Thulium (Emission um 810 nm). Die Wellenlänge des Pumplasers 13 (Fig. 8, 9) muss entsprechend angepasst sein.

Der Laser-Resonator 3 wird von einem einzelnen Bragg-Gitter 3 gebildet, welches in die Faser 2 hineingeschrieben ist. Im Gegensatz hierzu haben gewöhnliche Laser bzw. Faserlaser 2 zwei separate Reflektoren bzw. Gitter, die einen Fabry-Perot-Resonator bilden. Die Länge des Gitters 3 beträgt typisch einige cm. Damit das Gitter als Resonator 3 für typischerweise durch Pumplicht 5 angeregte Laserwellen 6, 7 wirken kann, die bei einer Bragg-Wellenlänge $\lambda$ des Faser-Bragg-Gitters 3 oszillieren, muss die Gitterstruktur an einer Stelle einen Phasensprung von $\pi$ (bzw. $\pi$ + 2*m*$\pi$ mit m=ganze Zahl) aufweisen. Dies entspricht einem Sprung in der optischen Phase von $\pi/2$ (bzw. $\pi/2$ + m*$\pi$ oder $\lambda/4$ + m*$\lambda/2$). Der Phasensprung befindet sich vorzugsweise in der Mitte 4 des Gitters 3. Ohne einen solchen Phasensprung schwingt ein DFB-Laser 2 nicht wie i. a. gewünscht auf einem einzigen longitudinalen Laser-Modus, sondern auf zwei longitudinalen Moden, die symmetrisch zur Bragg-Wellenlänge $\lambda$ an den beiden Rändern des sogenannten Stop-Bandes des Gitters 3 liegen. Ausserdem ist die Laserschwelle höher. Enthält das Gitter 3 einen Phasensprung von $\pi$, so bildet sich innerhalb des Gitters 3 eine stehende Welle der Wellenlänge $\lambda$ aus. Die Amplitude des elektrischen Feldes nimmt mit zunehmender Entfernung von der Stelle der Phasenunstetigkeit exponentiell ab.

Bekanntermassen ist der $\pi$-Phasensprung im Faser-Bragg-Gitter 3 auf verschiedene Weisen erzeugbar. Das Gitter 3 kann in der Mitte über eine Länge von etwa 1 mm mit UV-Licht (z. B. bei 240 nm) bestrahlt werden. Die UV-Bestrahlung ändert den Brechungsindex der Faser und führt so zu dem gewünschten Phasensprung in der Gitterperiode. Der Phasensprung kann auch nicht-permanent durch lokales Heizen des Gitters erzeugt werden. Desweiteren kann ein Moire-Gitter verwendet werden, das durch zwei überlagerte Gitter mit leicht unterschiedlichen Perioden gebildet wird, deren über die Gitterlänge kumulierter Phasenunterschied $\pi$ + 2*m*$\pi$ beträgt. Eine weitere Methode besteht darin, das Bragg-Gitter 3 mit Hilfe einer speziellen Phasenmaske zu schreiben, welche bereits einen $\pi$-Phasensprung enthält.

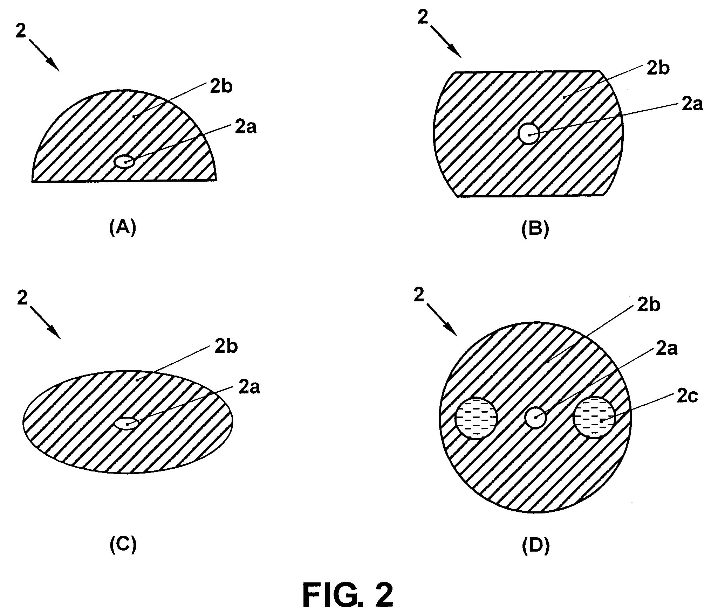

Die Rotationsasymmetrie der laserverstärkenden Faser 2 besagt, dass es einen Drehwinkel um die Faserlängsachse gibt, unter dem die Faser 2 nicht wieder in sich selber überführt werden kann. Die rotationsasymmetrische Struktur der laserverstärkenden Faser 2 dient dazu, eine Anisotropie zur Umsetzung eines isotropen Drucks p in eine induzierte lineare Doppelbrechung zwischen orthogonalen Polarisationsmoden X, Y und/oder unterschiedlichen Raummoden der Faser 2 zu schaffen. Typischerweise ist schon im unbelasteten Zustand eine inhärente lineare Doppelbrechung vorhanden, nämlich in den meisten Fasern zwischen orthogonalen Polarisationsmoden X, Y und in allen Fasern zwischen Raummoden. Neben den Fasern 2 mit elliptischem Kern (forminduzierte inhärente Doppelbrechung zwischen Polarisationsmoden) sind auch solche mit "bow-tie"- oder "panda"-Struktur (stressinduzierte inhärente Doppelbrechung zwischen Polarisationsmoden) gebräuchlich. Diese Typen sind in dem Artikel von K.-H. Tsai et al., "General Solutions for Stress-Induced Polarization in Optical Fibers", Journal of Lightwave Technology Vol. 9, Nr. 1 (1991) dargestellt. Fig. 2 zeigt als weitere Beispiele für laserverstärkende Fasern 2 mit inhärenter und durch isotropen Druck oder isotrop anlagerbare chemische Substanzen induzierbarer Doppelbrechung eine Faser (A) mit elliptischem Kern 2a und angeschliffener Hülle 2b ("D-shape" Struktur), eine Faser (C) mit elliptischem Kern 2a und elliptischer Faserhülle 2b und eine Faser (D) mit rundem Kern 2a, runder Hülle 2b und Seitenlöchern 2c ("side-hole" Struktur). Eine Besonderheit stellt eine Faser gemäss (A) mit rundem Kern 2a und die Faser (B) mit rundem Kern 2a und teilweise angeschliffener, rotationsasymmetrischer Faserhülle 2b dar. Diese Fasern sind bezüglich Polarisationsmoden im unbelasteten Zustand inhärent doppelbrechungsfrei. Bei der Faser (B) kann die Faserhülle 2b einseitig, zweiseitig oder mehrseitig angeschliffen sein, so dass durch isotropen Druck die Entartung reiner Polarisationsmoden X, Y (mit identischer Raummodenstruktur) aufgehoben wird und eine druckproportionale Doppelbrechung induzierbar ist. Weitere Beispiele sind sogenannte Mikrosturkturfasern mit einer nicht rotationssymmetrischen Struktur, wie "photonic crystal fibers" bzw. "photonic bandgap fibers" oder "holey fibers", die z. B. in B. J. Eggleton, Journal of Lightwave Technologies, Vol. 18, S. 1084-1099 (2000) beschrieben sind.

Im folgenden wird auf den Fall einer elliptischen Kernfaser 2 genauer eingegangen. Parameter der elliptischen Kernfaser 2 sind der Unterschied $\Delta N = N_1 - N_2$ der Brechungsindizes $N_1$, $N_2$ von Faserkern 2a und Faserhülle oder -mantel 2b, das Längenverhältnis e=a/b der Hauptachsen a, b des elliptischen Faserkerns 2a sowie die absolute Länge a der grossen Hauptachse. Diese Parameter a, b, $\Delta N$ oder e, a, $\Delta N$ sind in einem Ausführungsbeispiel so gewählt, dass bei den durch die geometrische Gitterperiode $\Lambda$ des Faser-Bragg-Gitters 3 festlegbaren Bragg-Wellenlängen $\lambda_{01}$, $\lambda_{11}{}^{gerade}$ die beiden räumlichen Fasermoden $LP_{01}$ und $LP_{11}{}^{gerade}$ (entsprechend $HE_{11}$ und $HE_{21}$ in anderer Notation) ausbreitungsfähig sind. Andererseits müssen die Bragg-Wellenlängen $\lambda_{LP01}$, $\lambda_{LP11}{}^{gerade}$ auch im Emissionswellenlängenbereich der laserverstärkenden Faser 2 liegen. Dann sind zwei longitudinale Lasermoden schwingungs- oder anregungsfähig, die den beiden Raummoden $LP_{01}$ und $LP_{11}{}^{gerade}$ zugeordnet sind (Fig. 1c). Zunächst sei angenommen, das Licht schwinge nur mit einer linearen Polarisation, vorzugsweise x parallel zur langen Hauptachse a des Kerns 2a. Der Laser 2 enthält dann zwei mit den beiden räumlichen Fasermoden $LP_{01}$ und $LP_{11}{}^{gerade}$ assoziierte stehende Wellenfelder. Da die effektiven Brechungsindizes $n_{LP01}$ und $n_{LP11}{}^{gerade}$ der beiden Raummoden $LP_{01}$ und $LP_{11}{}^{gerade}$ etwas unterschiedlich sind, sind auch die Bragg-Wellenlängen $\lambda_{LP01}$, $\lambda_{LP11}{}^{gerade}$ der beiden Moden $LP_{01}$, $LP_{11}{}^{gerade}$ verschieden, und der Laser 2 oszilliert auf zwei verschiedenen Emissions- oder Laserwellenlängen $\lambda_{LP01}$ und $\lambda_{LP11}{}^{gerade}$:

$$\lambda_{LP01} = 2{}^*n_{LP01}{}^*\Lambda \qquad (G1)$$

$$\lambda_{LP11}{}^{gerade} = 2{}^*n_{LP11}{}^{gerade}{}_*\Lambda \qquad (G2)$$

Dem Brechungsindexunterschied $\Delta n = n_{LP01} - n_{LP11}{}^{gerade}$ der Raummoden $LP_{01}$ und $LP_{11}{}^{gerade}$ entspricht der Wellenlängenunterschied $\Delta\lambda = \lambda_{LP01} - \lambda_{LP11}{}^{gerade}$ oder der optische Frequenzunterschied oder die Schwebungsfrequenz

$$\Delta\nu = (c/\lambda^2){}^*\Delta\lambda, \qquad (G3)$$

wobei c die Lichtgeschwindigkeit und $\lambda$ die mittlere Wellenlänge bezeichnen. Als Folge des Frequenzunterschiedes $\Delta\nu$ ist die Intensität der Laseremission mit der Schwebungsfrequenz $\Delta\nu$ moduliert.

Setzt man die Faser einem allseitigen Druck aus, so wird der Faserquerschnitt etwas komprimiert und die Faserlänge etwas vergrössert. Aufgrund des elasto-optischen Effekts ändern sich die Brechungsindizes $N_1$ und $N_2$ von Kern und Mantel. Die Differenz $\Delta n = n_{LP01} - n_{LP11}{}^{gerade}$ der effektiven Brechungsindizes der beiden Raummoden ändert sich um $\delta(\Delta n)$ und die Gitterperiode um $\delta\Lambda$. Die Änderungen sind proportional zum Druck. Wegen $\Delta\lambda = 2{}^*\Delta n{}^*\Lambda$ kann die Änderung des Wellenlängenunterschieds $\delta(\Delta\lambda)$ bei einer Druckänderung $\delta p$ geschrieben werden als

$$\delta(\Delta\lambda)/\delta p = 2{}^*\Lambda{}^*[\delta(\Delta n)/\delta p + (\Delta n/\Lambda){}^*(\delta\Lambda/\delta p)] \qquad (G4).$$

Die entsprechende Frequenzverschiebung pro Druckänderung $\delta(\Delta\nu)/\delta p$ beträgt

$$\delta(\Delta\nu)/\delta p = 2{}^*(c/\lambda^2){}^*\Lambda{}^*[\delta(\Delta n)/\delta p + (\Delta n/\Lambda){}^*(\delta\Lambda/\delta p)] \qquad (G5).$$

Die relativen Änderungen des Wellenlängenunterschiedes $\delta(\Delta\lambda)/\Delta\lambda$ und der Schwebungsfrequenz $\delta(\Delta\nu)/\Delta\nu$ betragen

$$\delta(\Delta\lambda)/\Delta\lambda = \delta(\Delta\nu)/\Delta\nu = \delta(\Delta n)/\Delta n + \delta\Lambda/\Lambda \qquad (G6).$$

Der druckabhängige Term $A = \delta(\Delta n)/\delta p + (\Delta n/\Lambda)*(\delta\Lambda/\delta p)$ in Gleichung (G4), (G5) wurde für eine Zweimoden-faser mit $a \approx 4$ um, $e=2$ und $\Delta N=0.056$ experimentell bestimmt: $A=2{,}1*10^{-7}$ $MPa^{-1}$ für $\lambda=1310$ nm. Daraus ergibt sich für einen 1310 nm - Laser eine Frequenzverschiebung als Funktion des Drucks von ca. 28 MHz/MPa.

Der Brechungsindexunterschied $\Delta n = n_{LP01} - n_{LP11}^{gerade}$ der beiden räumlichen Moden $LP_{01}$ und $LP_{11}^{gerade}$ ist abhängig von den oben genannten Faserparametern a, b, $\Delta N$ und der Wellenlänge $\lambda$. Bei gegebener Elliptizität $e = a/b$ des Kerns 2a ist $\Delta n$ um so grösser, je grösser der Unterschied $\Delta N$ der Brechungsindexes von Faserkern 2a und -mantel 2b ist. Bei gegebenen Brechungsindizes $N_1$, $N_2$ von Kern und Mantel wächst $\Delta n$ mit abnehmender Elliptizität e des Kerns 2a.

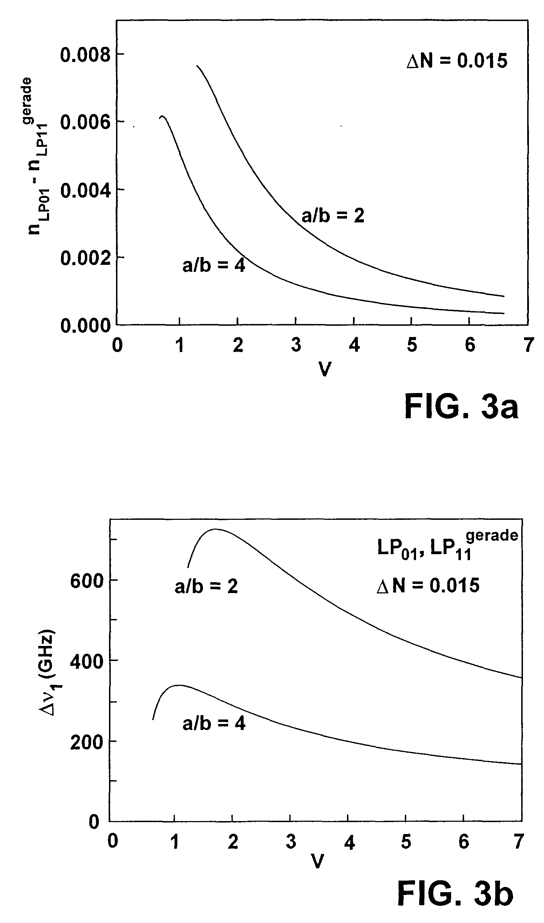

Fig. 3a zeigt $\Delta n$ als Funktion der normierten Frequenz V für $AN=0.015$ und zwei verschiedene Kernelliptizitäten $e=2$ und $e=4$. Die normierte Frequenz V ist umgekehrt proportional zur Wellenlänge $\lambda$:

$$V = (2\pi/\lambda) * (b/2) * (N_1^2 - N_2^2)^{1/2} \qquad (G7).$$

Fig. 3b zeigt die resultierenden Schwebungsfrequenzen $\Delta\nu_1(V)$ als Funktion von V gemäss der Gleichung:

$$\Delta\nu(V) = c* (\Delta n(V)/n) * (V/b) *\pi^{-1}* (N_1^2 - N_2^2)^{-1/2} \qquad (G8),$$

wobei n=mittlerer effektiver Modenbrechungsindex. Gleichung (G8) kann aus (G3) mit Hilfe von (G1), $\Delta\lambda=2*\Delta n*\Lambda$ und (G7) hergeleitet werden. Den Kurven in Fig. 3b ist eine Länge b der kleinen Kernachse von 4.66 µm zugrundegelegt. Eine Wellenlänge $\lambda=1535$ nm (Erbium-dotierte Faser) entspricht dann einer normierten Frequenz V=2.

Für Fasern mit gebräuchlichen Werten von $\Delta N$ und e liegen die Schwebungsfrequenzen $\Delta\nu_1$ im Bereich ober-halb 100 GHz und sind deshalb nicht auf einfache Weise messbar. Im folgenden sind deshalb Varianten des Sensors angegeben, bei denen kleinere Schwebungsfrequenzen auftreten, die mit kommerziellen Photodetektoren 16, 20 und Signalanalysatoren 17, 21 registriert werden können. Hierfür können bestimmte höhere Raummoden und/oder überlagerte Faser-Bragg-Gitter Resonatoren 3 verwendet werden.

In einem Ausführungsbeispiel wird der DFB Faserlaser 2 mit vier räumlichen Moden betrieben. Der Unter-schied der effektiven Brechungsindizes $\Delta n = n_{LP01} - n_{LP11}$ zwischen dem $LP_{01}$ und dem geraden $LP_{11}$-Modus ist relativ gross. Dies führt zu relativ grossen Schwebungsfrequenzen $\Delta\nu_1$, die je nach Faserparameter a, b, $\Delta N$ ausserhalb des Frequenzbereichs liegen können, der mit kommerziellen Messsystemen erfassbar ist. Deutlich kleinere Schwebungs-frequenzen $\Delta\nu_2$ können erreicht werden, wenn man die Faser so dimensioniert, dass vier (oder mehr) räumliche Moden ausbreitungsfähig sind: $LP_{01}$, $LP_{11}^{gerade}$, $LP_{11}^{ungerade}$ (auch $HE_{12}$ genannt) sowie gerader $LP_{21}$-Modus (auch $HE_{31}$ genannt). So ist z. B. für eine Faser mit näherungsweise $e=2$ der Brechungsindexunterschied $n_{LP11}^{ungerade} - n_{LP21}^{gerade}$ zwischen dem $LP_{11}^{ungerade}$ und dem $LP_{21}^{gerade}$-Modus klein und weist bei V=3,2 einen Nulldurchgang auf.

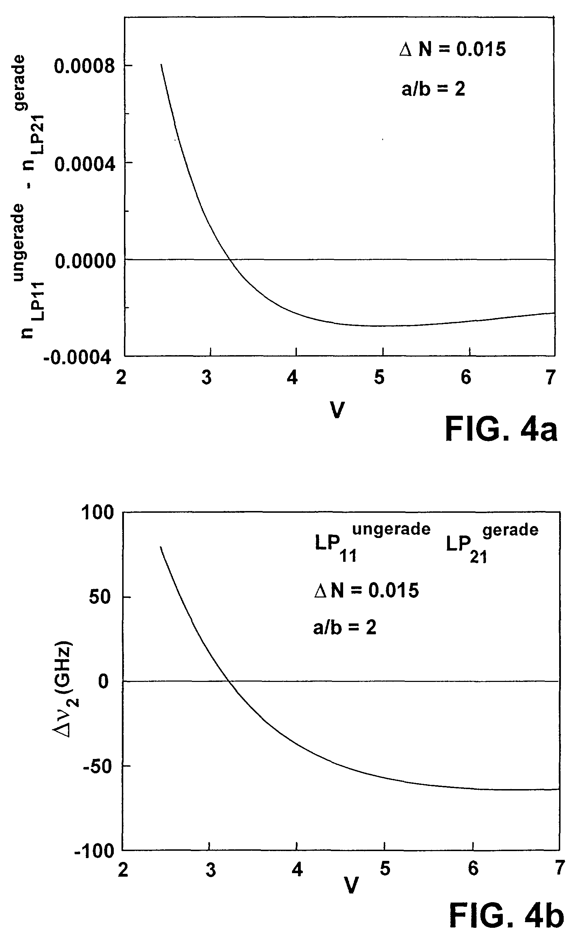

Die Fig. 4a und 4b zeigen für $e=2$ und $AN=0.015$ die Differenz $n_{LP11}^{ungerade} - n_{LP21}^{gerade}$ sowie die resultierende Schwebungsfrequenz $\Delta\nu_2$ als Funktion von V. Die Schwebungsfrequenzen $\Delta\nu_2$ liegen nun in einem Bereich, in dem sie mit üblichen Mitteln 16-21 messbar sind. Die Funktion $\Delta\nu_2 = \Delta\nu_2(V)$ ist für $b=7.53$ µm berechnet. In diesem Fall entspricht der Nulldurchgang von $\Delta\nu_2(V)$ einer Wellenlänge $\lambda=1535$ nm.

In einem weiteren Ausführungsbeispiel wird der Faserlaser 2 mit zwei Raummoden in zwei überlagerten Faser-Bragg-Gitter Strukturen 3 betrieben. Die Faserparameter a, b, $\Delta N$ sind hier vorzugsweise so gewählt, dass die beiden räumlichen Moden niedrigster Ordnung ausbreitungsfähig sind ($LP_{01}$- und $LP_{11}^{gerade}$-Modus). Die Faser 2 enthält nun anstelle eines einzelnen Bragg-Gitters 3 zwei Gitter 3, die übereinander, überlappend oder räumlich separiert geschrieben sind und deren Gitterperioden $\Lambda_1$ und $\Lambda_2$ so gewählt sind, dass die den beiden räumlichen Moden $LP_{01}$ und $LP_{11}^{gerade}$ zugeordneten Bragg-Wellenlängen $\lambda_{LP01}$ und $\lambda_{LP11}^{gerade}$ ohne angelegten Druck p zumindest nähe-rungsweise gleich sind:

$$\lambda_{LP01} = \lambda_{LP11}^{gerade} \qquad (G9).$$

Wegen $\lambda_{LP01}=2*n_1*\Lambda_1$ und $\lambda_{LP11}^{gerade}=2*n_2*\Lambda_2$, wobei $n_1=n_{LP01}$ und $n_2=n_{LP11}^{gerade}$, ist das Verhältnis der Gitterperioden $\Lambda_1$, $\Lambda_2$ der Faser-Bragg-Gitter 3 damit zumindest näherungsweise wie folgt zu wählen:

$$\Lambda_2/\Lambda_1 = n_1/n_2 \qquad (G10).$$

Die Schwebungsfrequenz $\Delta\nu_1$ ohne Druck ist dann Null. Die beiden Einzelgitter 3 weisen jeweils wieder einen

Phasensprung von $\pi$ auf. Überlagerte Gitter 3 sind entsprechend auch auf andere Modenpaar-Schwebungsfrequenzen anwendbar.

Für eine Faser mit AN=0.015 und e=2, die bei einer normierten Frequenz V=2 betrieben wird, beträgt $\Delta n = n_{LP01} - n_{LP11} = 5,3*10^{-3}$ (Fig. 3a). In diesem Fall müssen $\Lambda_1$ und $\Lambda_2$ um 1.6 nm unterschiedlich gewählt sein und bei ca. 455 nm liegen, damit die beiden emittierten Wellenlängen $\lambda_{LP01}$ und $\lambda_{LP11}$ gleich sind und ca. 1535 nm betragen. Die absolute Grösse des Kerns 2a muss dabei so gewählt werden, dass 1535 nm einer normierten Frequenz V=2 entspricht. Man erhält aus Gleichung (G7) mit $N_1=1.475$ und $N_2=1.46$: b=4.65 µm und folglich a=9.3 µm.

Neben $\lambda_{LP01}$ und $\lambda_{LP11}$ gibt es zwei weitere Emissionswellenlängen $\lambda'_{LP01}=2*n_2*\Lambda_1$ und $\lambda'_{LP11}=2*n_1*\Lambda_2$. Ihr Unterschied $\Delta\lambda' \approx 4*\Delta n*\Lambda_1$ ist doppelt so gross wie im Fall eines einfachen Gitters 3. Die resultierende Schwebungsfrequenz ist in der Regel sehr hoch und wird nicht detektiert.

In den oben angegebenen Beispielen ist angenommen, dass die räumlichen Moden nur mit einer Polarisationsrichtung angeregt sind, nämlich parallel zur grossen oder kleinen Hauptachse a oder b des elliptischen Faserkerns 2a; die angegebenen Kurven sind für eine Polarisation parallel zur grossen Hauptachse a berechnet. Erfolgt die Laseremission 6, 7 auf beiden Polarisationsrichtungen x, y, so treten aufgrund der Doppelbrechung der Faser zusätzliche Emissions- oder Laserwellenlängen und Schwebungsfrequenzen auf, die ebenfalls durch die Messmittel 15-21 erfassbar und z. B. zur Temperaturkompensation verwendbar sind.

Andere Ausführungsbeispiele betreffen einen erfindungsgemässen polarimetrischen Faserlaser-Sensor 1. In einer ersten Variante wird eine einfache Gitterstruktur 3 und nur der Grundmodus $LP_{01}$ betrachtet. Beide Polarisationsmoden X und Y sind angeregt. Die Laseremission 6, 7 erfolgt auf den Wellenlängen

$$\lambda_{LP01,x} = 2*n_{LP01,x}*\Lambda \qquad (G11),$$

$$\lambda_{LP01,y} = 2*n_{LP01,y}*\Lambda \qquad (G12),$$

wobei $n_{LP01,x}$ und $n_{LP01,y}$ die effektiven Brechungsindizes für die beiden Polarisationsrichtungen x, y sind und $\Lambda$ die geometrische Gitterperiode des Bragg-Gitters 3 ist.

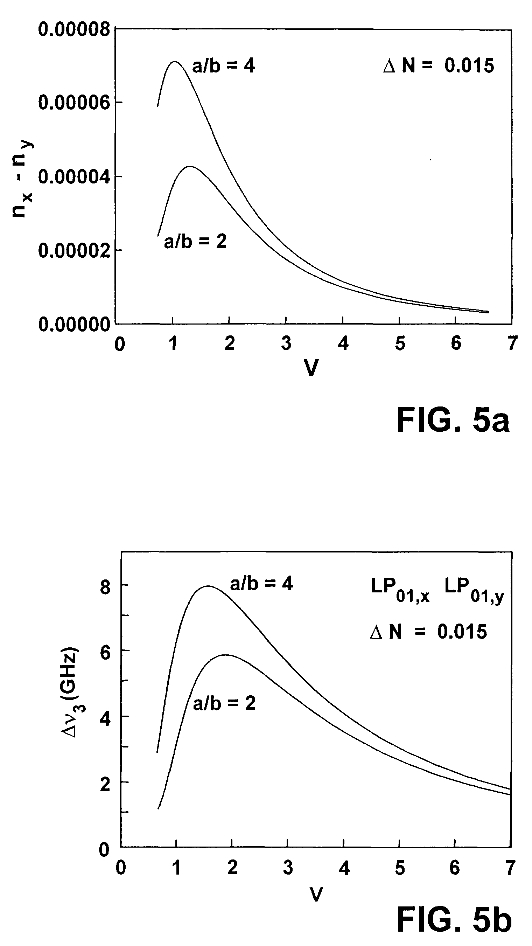

Die resultierende Schwebungsfrequenz $\Delta\nu_3$ ergibt sich wieder gemäss Gleichung (G3) mit $\Delta\lambda = \lambda_{LP01,x} - \lambda_{LP01,y}$. Die Fig. 5a und 5b zeigen den Brechungsindexunterschied $n_{LP01,x} - n_{LP01,y}$ und die resultierende Schwebungsfrequenz $\Delta\nu_3$ als Funktion der normierten Frequenz V, wiederum für Fasern mit AN=0.015 und e=2 sowie $\Delta N=0.015$ und e=4. Die Kurven in Fig. 5b sind für b=3.50 µm berechnet. Eine Wellenlänge $\lambda=1535$ nm entspricht dann $V\approx2$. Die Schwebungsfrequenzen $\Delta\nu_3$ liegen im Bereich von wenigen GHz und sind damit leicht messbar.

Der druckabhängige Term $A=\delta(\Delta n)/\delta p + (\Delta n/\Lambda)*(\delta\Lambda/\delta p)$ in den Gleichungen (G4), (G5) wurde für eine polarimetrische Sensorfaser (a≈4 µm, e=2, AN=0.031) experimentell bestimmt: $A=0,4*10^{-7}$ $MPa^{-1}$ für $\lambda=1535$ nm. Daraus ergibt sich eine Frequenzverschiebung von 5.4 MHz/MPa.

In einer zweiten Variante besteht die Bragg-Gitterstruktur 3 wie zuvor aus zwei überlagerten Gittern 3 mit räumlichen Perioden $\Lambda_1$ und $\Lambda_2$, die so gewählt sind, dass ohne angelegten Druck p die Schwebungsfrequenz $\Delta\nu_3$ näherungsweise Null ist. Für das Verhältnis der Gitterperioden gilt hier

$$\Lambda_2/\Lambda_1 = n_1/n_2 = n_{LP01,x}/n_{LP01,y} \qquad (G13).$$

Jedes Einzelgitter enthält wieder einen Phasensprung von $\pi$.

Andere Ausführungsbeispiele betreffen die Kompensation von Temperatureffekten. Der Unterschied der effektiven Brechungsindizes der orthogonalen Polarisationsmoden X, Y oder der räumlichen Moden $LP_{01}$, $LP_{11}^{gerade}$ usw. ist gewöhnlich temperaturabhängig. Die Schwebungsfrequenzen $\Delta\nu$ verschieben sich deshalb nicht nur als Funktion des Drucks p, sondern auch in Abhängigkeit von der Temperatur T. Im folgenden werden drei Möglichkeiten angeben, um ein von der Temperatur T unabhängiges Drucksignal p zu erhalten:

a) Die Temperatur wird durch Messen der Laserwellenlänge $\lambda$ bestimmt. Die optische Gitterperiode $n*\Lambda$ des Bragg-Gitters 3 für den jeweiligen Brechungsindex n und folglich die emittierten Laserwellenlängen $\lambda$ sind temperaturabhängig. Im Wellenlängenbereich um 1550 nm verschieben sich die Wellenlängen $\lambda$ um ca. 10 pm/°C. Innerhalb des Detektionssystems wird vorzugsweise mit Hilfe eines faseroptischen Kopplers 15 ein Teil des emittierten Lichts 6 oder 7 für eine Wellenlängendetektion bzw. Temperaturbestimmung abgezweigt. Die Wellenlänge $\lambda$ kann z. B. mit Hilfe eines durchstimmbaren, faseroptischen Fabry-Perot-Filters oder eines Wellenlängenmultiplexers 15 gemessen werden. Beim Wellenlängenmultiplexer 15 wird ausgenutzt, dass das Verhältnis der Lichtintensitäten an den beiden Ausgängen des Multiplexers 15 wellenlängenabhängig ist. Mit der nun bekannten Temperatur T kann das Drucksignal p temperaturkompensiert werden.

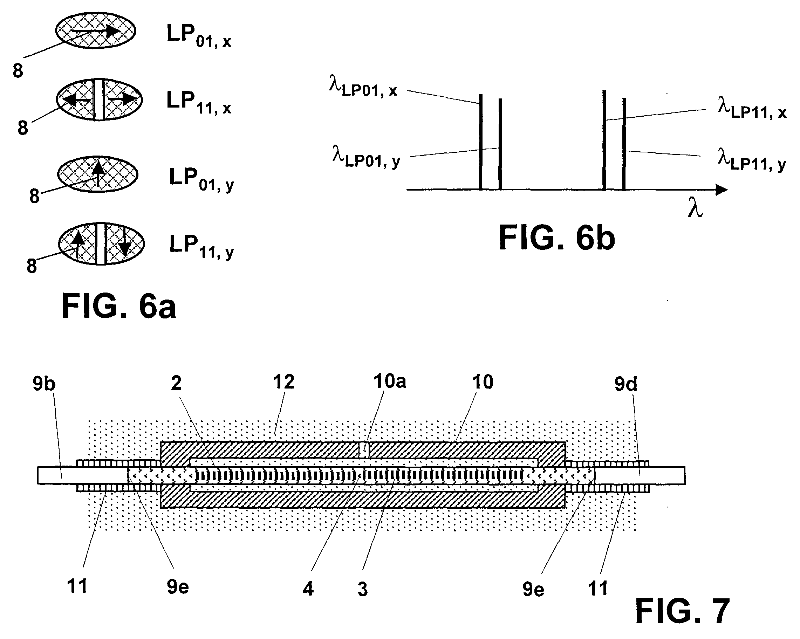

b) Die Temperatur T und der Druck p werden aus mehreren Schwebungsfrequenzen $\Delta\nu$ bestimmt. Wird ein Laser 2 mit zwei räumlichen Moden auf beiden orthogonalen Polarisationen x, y betrieben (Fig. 6a, 6b), treten insgesamt sechs Schwebungsfrequenzen auf, von denen z. B. vier $\Delta\nu_a$, $\Delta\nu_b$, $\Delta\nu_c$, $\Delta\nu_d$ gemessen werden können, welche den effektiven Moden-Brechungsindexunterschieden $n_{LP01,x}$-$n_{LP11,x}$, $n_{LP01,y}$-$n_{LP11,y}$, $n_{LP01,x}$-$n_{LP01,y}$ und $n_{LP11,x}$-$n_{LP11,y}$ entsprechen. Die Brechungsindexunterschiede haben gewöhnlich unterschiedliche Temperaturabhängigkeiten. Insbesondere unterscheiden sich die Temperaturabhängigkeiten der Brechungsindexunterschiede der räumlichen Moden $LP_{01}$, $LP_{11}$ ($n_{LP01,x}$-$n_{LP11,x}$; $n_{LP01,y}$-$n_{LP11,y}$) von denen der orthogonalen Polarisationsmoden X, Y mit gleicher räumlicher Modenstruktur ($n_{LP01,x}$-$n_{LP01,y}$; $n_{LP11,x}$-$n_{LP11,y}$). Für die Verschiebung der Schwebungsfrequenzen $\Delta\nu_a$, $\Delta\nu_b$, $\Delta\nu_c$, $\Delta\nu_d$ bei Druck- und Temperaturänderungen $\delta p$ und $\delta T$ lässt sich ein System von vier Gleichungen aufstellen:

$$\delta(\Delta\nu_a) \;=\; a_{11}*\delta p \;+\; a_{12}*\delta T$$

$$\delta(\Delta\nu_b) \;=\; a_{21}*\delta p \;+\; a_{22}*\delta T \qquad\qquad (G14)$$

$$\delta(\Delta\nu_c) \;=\; a_{31}*\delta p \;+\; a_{32}*\delta T$$

$$\delta(\Delta\nu_d) \;=\; a_{41}*\delta p \;+\; a_{42}*\delta T$$

Die Koeffizienten $a_{ij}$ mit Indizes i=1, 2, 3, 4 und j=1, 2 können experimentell bestimmt werden. Druck- und Temperaturänderungen können dann unabhängig voneinander ermittelt werden.

c) Sensoren, welche mit zwei räumlichen Moden ($LP_{01}$ und $LP_{11}^{gerade}$) arbeiten, können auch inhärent temperaturkompensiert sein. In diesem Fall gibt es eine Wellenlänge $\lambda$, bei der die Gruppengeschwindigkeiten der beiden Raummoden gleich sind. Für diese Wellenlänge $\lambda$ weisen die Brechungsindizes $n_{LP01}$ und $n_{LP11}$ die gleiche Temperaturabhängigkeit auf. Werden die Faserparameter a, b, $\Delta N$ und Gitterparameter $\Lambda$, n so aufeinander abgestimmt, dass die Laseremission 6, 7 auf dieser Wellenlänge $\lambda$ erfolgt, ist der Unterschied $\lambda_{LP01}$-$\lambda_{LP11}$ bzw. die resultierende Schwebungsfrequenz $\Delta\nu$ unabhängig von der Temperatur T.

Fig. 7 zeigt das Sensorgehäuse oder die Kapillare 10 für den DFB Faserlaser 2 mit einem Druckeinlass 10a für ein druckübertragendes oder chemische Substanzen beinhaltendes Messfluid 12. Die Faser 2 ist aussen am Gehäuse 10 durch ein Faserkabel 11 mechanisch geschützt. Für eine Druckmessung ist die Laser- und Sensorfaser 2 vorzugsweise mit einem Schutzmantel (z. B. einer dünnen Chrom/Gold-Beschichtung) versehen, die das Eindringen von Fluidmolekülen 12 in die Faser 2 bei hohen Drücken p und Temperaturen T verhindert. Zur Messung chemischer Substanzen können spezifische Beschichtungen zur gegebenenfalls selektiven Anlagerung von Analyten vorhanden sein. Zur Messung akustischer oder seismischer Drücke oder Wellen kann eine Beschichtung mit Polyurethan o. ä. zur Impedanzanpassung an das schallübertragende Medium 12 vorhanden sein. Mit Vorteil ist der oder jeder Faser-Bragg-Gitter Resonator 3 über seine gesamte Länge einem isotropen Druck p, einer akustischen oder seismischen Welle oder einer chemischen Substanz zugänglich.

Eine Seite des Faserlasers 2 ist über eine Verbindungsfaser 9b mit dem Pumplaser 13 und den Messmitteln 15-21 verbunden. Die andere Seite kann mit weiteren in Serie angeordneten Sensoren 2 über eine Zuführungsfaser 9d verbunden sein. Im Falle einer elliptischen Kernfaser 2 können Zusatzmittel 9b-9e zur räumlich selektiven Auskopplung und Detektion mindestens eines Interferenzmusteranteils unterschiedlicher Raummoden $LP_{01}$, $LP_{11}^{gerade}$, $LP_{11}^{ungerade}$, $LP_{21}^{gerade}$ mit einem nichtverschwindenden Kontrast im resultierenden Schwebungssignal dadurch realisiert sein, dass eine monomodige Zuführungsfaser 9b, 9c oder 9d zur Übertragung emittierten Laserlichts 7 zu einer Detektionseinheit 16, 20 verwendet wird und die Zuführungsfaser 9b, 9c oder 9d über einen Spleiss 9e mit seitlichem Versatz mit der laserverstärkenden Faser 2 in optischer Verbindung steht.

In Fig. 8 ist die Sensor-Gesamtkonfiguration 1 gezeigt. Der Faserlaser-Sensor 1 wird im Falle einer mit Erbium/Ytterbium dotierten Faser 2 mit einem 980nm-Halbleiterlaser 13 angeregt. Statt des 980nm-Pumplasers 13 kann auch ein 1480nm-Laser 13 eingesetzt werden, insbesondere bei Erbium-dotierten Fasern 2 ohne Ytterbium. Das Pumplicht 5 wird vorzugsweise über einen Wellenlängenmultiplexer 14 und eine Faserverbindung 9b dem Sensor 1 zugeführt. Im Falle der dargestellten Reflexionsgeometrie gelangt das vom Faserlaser 2 rückwärts emittierte Licht 7 über die gleiche Verbindungsfaser 9b und den Wellenlängenmultiplexer 14 zum Empfänger 16. Die im Ausgangssignal enthaltene(n) Schwebungsfrequenz(en) $\Delta\nu$ wird oder werden mit einem geeigneten Frequenzzähler (gegebenenfalls mit Frequenzfilter) oder Signalanalysator 17 detektiert. Alternativ kann auch das mit dem Pumplicht 5 kopropagierende vorwärts emittierte Laserlicht 6 des Sensors 1 detektiert werden.

Um eine Schwebung aus zwei zueinander orthogonalen Polarisationsmoden X, Y zu erzeugen, müssen diese, bevor sie den Empfänger 16 erreichen, in einem Polarisator mit vorgeschalteter Polarisationskontrolle (nicht dargestellt) zur Interferenz gebracht werden. Dagegen erfordert die Erzeugung einer Schwebung zweier Raummoden $LP_{01}$, $LP_{11}$ usw. gleicher Polarisation keine zusätzlichen Mittel.

Fig. 9 zeigt ein Beispiel, wie mehrere in Serie angeordnete Faserlaser mit einem einzigen Pumplaser 13 und einem Detektionssystem 20, 21 betrieben werden können (quasiverteilte Druckmessung). Die Gitterperioden $\Lambda_1$, ..., $\Lambda_n$ der einzelnen Laser 1 und folglich je mindestens eine Emissionswellenlänge $\lambda_1$, ..., $\lambda_n$ ihrer Laserspektren sind etwas unterschiedlich gewählt, so dass die verschiedenen Sensoren 1 anhand der Emissionswellenlängen $\lambda_1$, ..., $\lambda_n$ unterscheidbar sind. Die einzelnen Wellenlängen $\lambda_1$, ..., $\lambda_n$ werden in einem Wellenlängenmultiplexer 18 getrennt und in einem Mehrkanaldetektor 19 und einer Mehrkanal-Auswerteelektronik 21 jeweils einem Emfänger 16 mit nachgeschaltetem Frequenzzähler 17 zugeführt.

Als Messgrösse kann ausser einem isotropen Druck p und einer chemischen Substanz auch eine uniaxiale seitliche oder in Faserrichtung wirksame Kraft oder über den Kerr-Effekt ein elektrisches Feld detektiert werden. Insbesondere ist ein zeitlich veränderlicher Druck p von einer akustischen oder seismischen Welle z. B. in einem Erdölbohrloch messbar.

**BEZUGSZEICHENLISTE**

| | |
|---|---|
| 1 | Faserlaser-Sensor |
| 2 | Faserlaser, anisotrope Sensorfaser |
| 2a | (elliptischer) Faserkern |
| 2b | Faserhülle ("cladding") |
| 2c | seitliche Löcher |
| 3 | Faser-Bragg-Gitter Resonator |
| 4 | $\pi$-Phasensprung |
| 5 | Pumplicht |
| 6 | Vorwärts-Laseremission |
| 7 | Rückwärts-Laseremission |
| 8 | Polarisationsvektor |
| 9a-9d | Zuführungsfasern |
| 9e | Spleiss mit seitlichem Versatz |
| 10 | Gehäuse, Kapillare |
| 10a | Druckeinlass |
| 11 | Faserkabel |
| 12 | Fluid |
| 13 | Pumplichtquelle, Pumplaser |
| 14 | Faserkoppler, Wellenlängenmultiplexer |
| 15 | Wellenlängenmultiplexer zur Wellenlängenmessung |
| 16 | Detektor, Photodiode |
| 17 | Frequenzzähler |
| 18 | Wellenlängendemultiplexer |
| 19 | Mehrkanaldetektor |
| 20 | Detektionseinheit |
| 21 | Auswerteelektronik |

| | |
|---|---|
| a, b | Ellipsenachsen |
| $LP_{01}$, $LP_{11}^{gerade}$, $LP_{11}^{ungerade}$, $LP_{21}^{gerade}$ | Raummoden |
| $n_{LP01}$, $n_{LP11}^{gerade}$, $n_{LP11}^{ungerade}$, $n_{LP21}^{gerade}$ | effektive Raummoden- Brechungsindizes |
| $n_x$, ny | effektive Polarisationsmoden-Brechungsindizes |
| $n_1$, $n_2$ | effektive Moden-Brechungsindizes |
| $N_1$, $N_2$ | Brechungsindex von Faserkern, Fasermantel |
| $\Delta N$ | Brechungsindexsprung |
| p | (isotroper) Druck |
| V | normierte Frequenz |

| | |
|---|---|
| x, y | lineare Polarisationsachsen, Index für Polarisation der Raummoden |
| X, Y | Polarisationsmoden (mit beliebiger Raummodenstruktur) |
| $\Lambda$, $\Lambda_1$, $\Lambda_2$ | Gitterperiode |
| $\lambda_{LP01}$, $\lambda_{LP11}^{gerade}$, $\lambda_{LP11}^{ungerade}$, $\lambda_{LP21}^{gerade}$; $\lambda_1$, ..., $\lambda_n$ | Wellenlängen |
| $\Delta v$, $\Delta v_1$, $\Delta v_2$, $\Delta v_3$, $\Delta v_a$, $\Delta v_b$, $\Delta v_c$, $\Delta v_d$ | Schwebungsfrequenzen |

**Patentansprüche**

1. Faserlaser-Sensor (1), insbesondere geeignet zur Druckmessung in Erdölbohrlöchern, umfassend einen DFB-Faserlaser (2), der eine laserverstärkende Faser (2) mit einem darin verteilt eingeschriebenen Faser-Bragg-Gitter Resonator (3) aufweist, wobei durch eine Messgrösse eine Doppelbrechung und Schwebungsfrequenz ($\Delta v_1$, $\Delta v_2$, $\Delta v_3$; $\Delta v_a$, $\Delta v_b$, $\Delta v_c$, $\Delta v_d$) zwischen Moden (X, Y, LP$_{01}$, LP$_{11}^{gerade}$, LP$_{11}^{ungerade}$, LP$_{21}^{gerade}$) der laserverstärkenden Faser (2) induzierbar sind und Messmittel (15-21) zur Bestimmung der Schwebungsfrequenz ($\Delta v_1$, $\Delta v_2$, $\Delta v_3$; $\Delta v_a$, $\Delta v_b$, $\Delta v_c$, $\Delta v_d$) vorhanden sind, **dadurch gekennzeichnet, dass**

   a) die laserverstärkende Faser (2) eine nicht rotationssymmetrische Struktur aufweist,
   b) ein Emissionswellenlängenbereich und Parameter (a, b, $\Delta N$) der laserverstärkenden Faser (2) derart gewählt sind, dass der Emissionswellenlängenbereich und ein Wellenlängenbereich, in dem mindestens zwei unterschiedliche Raummoden (LP$_{01}$, LP$_{11}^{gerade}$, LP$_{11}^{ungerader}$, LP$_{21}^{gerade}$) ausbreitungsfähig sind, in einem Spektralbereich überlappen und
   c) mindestens eine Gitterperiode $\Lambda$ des Faser-Bragg-Gitter Resonators (3) derart gewählt ist, dass den unterschiedlichen Raummoden (LP$_{01}$, LP$_{11}^{gerade}$, LP$_{11}^{ungerade}$, LP$_{21}^{gerade}$) zugeordnete Bragg-Wellenlängen ($\lambda_{LP01}$, $\lambda_{LP11}^{gerade}$, $\lambda_{LP11}^{ungerade}$, $\lambda_{LP21}^{gerade}$) in dem Spektralbereich liegen.

2. Faserlaser-Sensor (1), insbesondere geeignet zur Druckmessung in Erdölbohrlöchern, umfassend einen DFB-Faserlaser (2), der eine laserverstärkende Faser (2) mit einem darin verteilt eingeschriebenen Faser-Bragg-Gitter Resonator (3) aufweist, wobei durch eine Messgrösse eine Doppelbrechung und Schwebungsfrequenz ($\Delta v_1$, $\Delta v_2$, $\Delta v_3$; $\Delta v_a$, $\Delta v_b$, $\Delta v_c$, $\Delta v_d$) zwischen Moden (X, Y, LP$_{01}$, LP$_{11}^{gerade}$, LP$_{11}^{ungerade}$, LP$_{21}^{gerade}$) der laserverstärkenden Faser (2) induzierbar sind und Messmittel (15-21) zur Bestimmung der Schwebungsfrequenz ($\Delta v_1$, $\Delta v_2$, $\Delta v_3$; $\Delta v_a$, $\Delta v_b$, $\Delta v_c$, $\Delta v_d$) vorhanden sind, **dadurch gekennzeichnet, dass**

   a) die Messgrösse ein radial auf die laserverstärkende Faser (2) einwirkender isotroper Druck p oder eine radial an die laserverstärkende Faser anlagerbare chemische Substanz ist und
   b) die laserverstärkende Faser (2) eine nicht rotationssymmetrische Struktur aufweist derart, dass durch den isotropen Druck p oder die chemische Substanz die Doppelbrechung und Schwebungsfrequenz ($\Delta v_1$, $\Delta v_2$, $\Delta v_3$; $\Delta v_a$, $\Delta v_b$, $\Delta v_c$, $\Delta v_d$) zwischen einem Paar oder mehrerern Paaren von Moden (X, Y, LP$_{01}$, LP$_{11}^{gerade}$, LP$_{11}^{ungerade}$, LP$_{21}^{gerade}$) der laserverstärkenden Faser (2) induzierbar sind.

3. Faserlaser-Sensor (1) nach Anspruch 2, **dadurch gekennzeichnet, dass** die Moden gleiche oder unterschiedliche Raummoden mit zueinander orthogonaler linearer Polarisation (X, Y) oder unterschiedliche Raummoden (LP$_{01}$, LP$_{11}^{gerade}$, LP$_{11}^{ungerade}$, LP$_{21}^{gerade}$) mit gleicher linearer Polarisation sind.

4. Faserlaser-Sensor (1) nach einem der vorangehenden Ansprüche, **dadurch gekennzeichnet, dass** die laserverstärkende Faser (2) einen elliptischen Kern (2a), eine "bow-tie"-Struktur, eine "panda"-Struktur, eine "sidehole"-Struktur (2c), eine "D-shape"-Struktur, eine elliptische Faserhülle (2b) oder eine teilweise angeschliffene Faserhülle aufweist oder eine mikrostrukturierte Faser mit einer nicht rotationssymmetrischen Struktur ist.

5. Faserlaser-Sensor (1) nach einem der vorangehenden Ansprüche, **dadurch gekennzeichnet, dass**

   a) die laserverstärkende Faser (2) einen elliptischen Kern (2a) aufweist und ein Emissionswellenlängenbereich und Parameter (a, b, $\Delta N$) der laserverstärkenden Faser (2) sowie eine Gitterperiode $\Lambda$ des Faser-Bragg-Gitter Resonators (3) derart aufeinander abgestimmt sind, dass mindestens zwei, insbesondere genau zwei oder vier, unterschiedliche Raummoden (LP$_{01}$, LP$_{11}^{gerade}$, LP$_{11}^{ungerade}$, LP$_{21}^{gerade}$) im Emissionswellenlängenbereich bei Bragg-Wellenlängen ($\lambda_{LP01}$, $\lambda_{LP11}^{gerade}$, $\lambda_{LP11}^{ungerade}$, $\lambda_{LP21}^{gerade}$) des Faser-Bragg-Gitter Resonators (3) ausbreitungsfähig sind,
   b) insbesondere dass Zusatzmittel (9b-9e) vorhanden sind, die zur räumlich selektiven Auskopplung und Detektion mindestens eines Interferenzmusteranteils unterschiedlicher Raummoden ($LP_{01}$, $LP_{11}^{gerade}$, $LP_{11}^{ungerade}$, $LP_{21}^{gerade}$) mit einem nichtverschwindenden Kontrast im resultierenden Schwebungssignal ausgestaltet sind und

c) insbesondere dass die Zusatzmittel (9b-9e) eine monomodige Zuführungsfaser (9b, 9c, 9d) zur Übertragung emittierten Laserlichts (7) zu einer Detektionseinheit (16, 20) sind, die über einen Spleiss (9e) mit seitlichem Versatz mit der laserverstärkenden Faser (2) in optischer Verbindung steht.

6. Faserlaser-Sensor (1) nach Anspruch 5, **dadurch gekennzeichnet, dass**

a) eine erste Schwebungsfrequenz ($\Delta v_1$) zwischen einem fundamentalen Raummode ($LP_{01,x}$, $LP_{01,y}$) und einem ersten höheren geraden Raummode ($LP_{11,x}^{gerade}$, $LP_{11,y}^{gerade}$) messbar ist und/oder

b) eine dritte Schwebungsfrequenz ($\Delta v_3$) zwischen gleichen Raummoden ($LP_{01}$, $LP_{11}^{gerade}$, $LP_{11}^{ungerade}$, $LP_{21}^{gerade}$), insbesondere den fundamentalen Raummoden ($LP_{01}$), mit orthogonaler linearer Polarisation (x, y) messbar ist.

7. Faserlaser-Sensor (1) nach einem der Ansprüche 5-6, **dadurch gekennzeichnet, dass**

a) eine zweite Schwebungsfrequenz ($\Delta v_2$) zwischen einem ersten höheren ungeraden Raummode ($LP_{11,x}^{ungerade}$, $LP_{11,y}^{ungerade}$) und einem zweiten höheren geraden Raummode ($LP_{21,x}^{gerade}$, $LP_{21,y}^{gerade}$) messbar ist und

b) insbesondere dass die Parameter (a, b, $\Delta N$) der laserverstärkenden Faser (2), insbesondere Längen der Kernellipsen-Hauptachsen (a, b) und ein Kern-Mantel Brechungsindexunterschied ($\Delta N$), in einem Wertebereich gewählt sind, für den die zweite Schwebungsfrequenz ($\Delta v_2$) kleiner als 100 GHz und vorzugsweise kleiner als 10 GHz ist und insbesondere in der Nähe eines Nulldurchgangs liegt.

8. Faserlaser-Sensor (1) nach einem der vorangehenden Ansprüche, **dadurch gekennzeichnet, dass**

a) zwei Faser-Bragg-Gitter Resonatoren (3) übereinander, überlappend oder räumlich getrennt in die laserverstärkende Faser (2) eingeschrieben sind und

b) ein Verhältnis $\Lambda_2/\Lambda_1$ von Gitterperioden $\Lambda_1$, $\Lambda_2$ der Faser-Bragg-Gitter Resonatoren (3) näherungsweise gleich einem Verhältnis $n_1/n_2$ effektiver Brechungsindizes zweier unterschiedlicher Raummoden ($LP_{01}$, $LP_{11}^{gerade}$, $LP_{11}^{ungerade}$, $LP_{21}^{gerade}$), vorzugsweise eines fundamentalen und ersten höheren geraden Raummodes ($LP_{01}$, $LP_{11}^{gerade}$), oder zweier gleicher Raummoden mit orthogonaler linearer Polarisation (X, Y) gewählt ist.

9. Faserlaser-Sensor (1) nach einem der vorangehenden Ansprüche, **dadurch gekennzeichnet, dass**

a) der oder jeder Faser-Bragg-Gitter Resonator (3) über seine gesamte Länge der Messgrösse, insbesondere einem isotropen Druck p oder einer chemischen Substanz, zugänglich ist und/oder

b) eine Gitterstruktur des Faser-Bragg-Gitter Resonators (3) vorzugsweise in einer Mitte (4) des Faser-Bragg-Gitters (3) einen Phasensprung von $\pi+m*2*\pi$ aufweist oder eine Gitterstruktur des Faser-Bragg-Gitter Resonators (3) zwei Faser-Bragg-Gitter (3) mit einer über ihre Länge verteilten Phasenverschiebung von $\pi+m*2*\pi$ aufweist, wobei m eine ganze Zahl bezeichnet.

10. Faserlaser-Sensor (1) nach einem der vorangehenden Ansprüche, **dadurch gekennzeichnet, dass** die Messmittel (15-21), insbesondere eine Detektionseinheit (16, 20) und eine Auswerteelektronik (17, 21), Mittel (15; 16, 17, 20, 21) zur Bestimmung einer Temperatur des Faserlaser-Sensors (1) und zur Korrektur einer Temperaturabhängigkeit eines Signals, insbesondere eines Drucksignals, des Faserlaser-Sensors (1) aufweisen.

11. Faserlaser-Sensor (1) nach Anspruch 10, **dadurch gekennzeichnet, dass**

a) die Mittel (15) zur Bestimmung einer Temperatur durch Messung einer Laserwellenlänge ($\lambda_{LP01}$, $\lambda_{LP11}^{gerade}$, $\lambda_{LP11}^{ungerade}$, $\lambda_{LP21}^{gerade}$) des Faserlaser-Sensors (1) ausgestaltet sind und

b) insbesondere dass die Mittel (15) einen Wellenlängenmultiplexer (15) mit einem geeignet wellenlängenabhängigen Auskoppelverhältnis umfassen.

12. Faserlaser-Sensor (1) nach Anspruch 10, **dadurch gekennzeichnet, dass** die Mittel (16, 17, 20, 21) zur Messung mehrerer Schwebungsfrequenzen ($\Delta v_a$, $\Delta v_b$, $\Delta v_c$, $\Delta v_d$) und zur separaten Bestimmung einer Druckänderung $\delta p$

und Temperaturänderung $\delta T$ mit Hilfe bekannter Temperaturkoeffizienten ($a_{12},...,a_{42}$) und Druckkoeffizienten ($a_{11},..., a_{41}$) der Schwebungsfrequenzen ($\Delta v_a$, $\Delta v_b$, $\Delta v_c$, $\Delta v_d$) des Faserlaser-Sensors (1) ausgestaltet sind.

13. Faserlaser-Sensor (1) nach den Ansprüche 5 und 10, **dadurch gekennzeichnet, dass** durch eine Wahl der Parameter (a, b, $\Delta N$) der laserverstärkenden Faser (2) und der Gitterperiode $\Lambda$ des Faser-Bragg-Gitter Resonators (3) einem fundamentalen Raummode ($LP_{01}$) und einem ersten höheren geraden Raummode ($LP_{11}^{gerade}$) zugeordnete Bragg-Wellenlängen ($\lambda_{LP01}$, $\lambda_{LP11}^{gerade}$) so gewählt sind, dass Gruppengeschwindigkeiten dieser Raummoden ($LP_{01}$, $LP_{11}^{gerade}$) gleich gross sind.

14. Faserlaser-Sensor (1) nach einem der vorangehenden Ansprüche, **dadurch gekennzeichnet, dass**

a) die Messgrösse ein zeitlich variierender Druck p, insbesondere eine akustische Welle oder eine seismische Welle, ist und
b) insbesondere dass die laserverstärkende Faser (2) eine Beschichtung, beispielsweise aus Polyurethan, zur akustischen Impedanzanpassung aufweist.

**FIG. 1a**

**FIG. 1b**

**FIG. 1c**

**FIG. 1d**

$LP_{01,x}$

$LP_{11,x}^{gerade}$

$\lambda_{LP01}$

$\lambda_{LP11}^{gerade}$

$\lambda$

FIG. 2

**FIG. 3a**

**FIG. 3b**

FIG. 4a

FIG. 4b

FIG. 5a

FIG. 5b

EP 1 197 738 A1

$LP_{01,\,x}$

$LP_{11,\,x}$

$LP_{01,\,y}$

$LP_{11,\,y}$

**FIG. 6a**

$\lambda_{LP01,\,x}$

$\lambda_{LP01,\,y}$

$\lambda_{LP11,\,x}$

$\lambda_{LP11,\,y}$

$\lambda$

**FIG. 6b**

**FIG. 7**

**FIG. 8**

EP 1 197 738 A1

**FIG. 9**

EP 1 197 738 A1

**Europäisches Patentamt**

## EUROPÄISCHER RECHERCHENBERICHT

Nummer der Anmeldung

EP 00 81 0965

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 99 32863 A (OPTOPLAN AS ;KRINGLEBOTN JON THOMAS (NO)) 1. Juli 1999 (1999-07-01) * das ganze Dokument * | 1,2 | G01L11/02 |
| A | US 4 915 468 A (KIM BYOUNG Y  ET AL) 10. April 1990 (1990-04-10) * Spalte 54, Zeile 46 – Spalte 60, Zeile 49 * | 1,2 | |

**RECHERCHIERTE SACHGEBIETE (Int.Cl.7)**

G01L

Der vorliegende Recherchenbericht wurde für alle Patentansprüche erstellt

| Recherchenort | Abschlußdatum der Recherche | Prüfer |
|---|---|---|
| DEN HAAG | 20. März 2001 | Nobrega,R. |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument
................................................
& : Mitglied der gleichen Patentfamilie,übereinstimmendes
     Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 00 81 0965

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2001

| Im Recherchenbericht angeführtes Patentdokument | Datum der Veröffentlichung | Mitglied(er) der Patentfamilie | Datum der Veröffentlichung |
|---|---|---|---|
| WO 9932863 A | 01-07-1999 | NO 976012 A<br>AU 1578699 A<br>EP 1040330 A | 21-06-1999<br>12-07-1999<br>04-10-2000 |
| US 4915468 A | 10-04-1990 | CA 1322878 A<br>CA 1292089 A | 12-10-1993<br>12-11-1991 |

EPO FORM P0461

Für nähere Einzelheiten zu diesem Anhang : siehe Amtsblatt des Europäischen Patentamts, Nr.12/82